(19) **Europäisches Patentamt / European Patent Office / Office européen des brevets**

(11) **EP 2 595 914 B1**

(12) **EUROPEAN PATENT SPECIFICATION**

(45) Date of publication and mention
of the grant of the patent:
**28.10.2020 Bulletin 2020/44**

(51) Int Cl.:
**B67D 1/04** *(2006.01)*     **B67D 1/12** *(2006.01)*
**G01F 13/00** *(2006.01)*     **G01F 22/02** *(2006.01)*
**B67D 1/08** *(2006.01)*

(21) Application number: **11741163.7**

(22) Date of filing: **21.07.2011**

(86) International application number:
**PCT/EP2011/062534**

(87) International publication number:
**WO 2012/010659 (26.01.2012 Gazette 2012/04)**

(54) **VOLUMETRIC MEASUREMENT OF BEVERAGE**

VOLUMETRISCHE MESSUNG EINES GETRÄNKS

MESURE VOLUMÉTRIQUE DE BOISSON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.07.2010 EP 10170294**

(43) Date of publication of application:
**29.05.2013 Bulletin 2013/22**

(73) Proprietor: **Carlsberg Breweries A/S
1799 Copenhagen V (DK)**

(72) Inventors:
• **RASMUSSEN, Jan Nørager
DK-3650 Ølstykke (DK)**
• **VESBORG, Steen
DK-2820 Gentofte (DK)**

(74) Representative: **Høiberg P/S
Adelgade 12
1304 Copenhagen K (DK)**

(56) References cited:
**EP-A2- 1 340 619**     **WO-A2-2004/050537**
**WO-A2-2008/005564**

**Description**

The present invention relates to a method and a system for volumetric measurement of beverage in a beverage dispensing system.

Background of the invention

Conventional beverage dispensing systems intended for professional or private use such as e.g. the DraughtMaster™ system produced by the applicant company are described in e.g. WO2007/019848, WO2007/019849, WO2007/019850, WO2007/019851 and WO2007/019853. Such beverage dispensing systems are used to store and dispense mainly carbonated beverages such as beer. Using a beverage dispensing system for storing and dispensing beverage provides many advantages compared to using cans or bottles. Most commercial beverage dispensing systems include a tapping system for a simple dispensing of the beverage into a beverage glass and a cooling system for keeping the beverage at a constant and correct low temperature.

For hygienic reasons all parts contacting the beverage must be handled in a sterile way to avoid dirt and bacteria to enter the beverage. Bacterial growth within the beverage will significantly reduce the flavour of the beverage and will pose a serious health problem for anyone drinking the beverage. Therefore, in most modern beverage dispensing systems the beverage container, the dispensing line connected thereto and the tapping valve are for single use only. In this way the beverage will be kept away from any possible contaminants during storage and dispensing. To ensure that the sterility of the parts contacting the beverage is maintained, it is therefore not allowed to disassemble the parts contacting the beverage, i.e. disconnecting the dispensing line from the container or the tapping valve from the tapping line. Such disconnections would compromise the sterile environment of the beverage.

Some beverage dispensing systems, such as the above mentioned DraughtMaster™ system, use a lightweight, collapsible and disposable beverage container or keg for accommodating the beverage and a pressurizing system for allowing the beverage flow from the container to the tapping system. The collapsible beverage container is typically made of thin and flexible plastic material and may even be in the form of a plastic bag. Typical volumes of beverage included in the beverage container are between 5-10 litres for systems intended for private users and between 10-50 litres for systems intended for professional users such as bars and restaurants. Even larger containers, such as tanks of 1000 litres or more may be used for professional users having a very large turnover of beverage, such as for arenas, stadiums or the like. The head space of the beverage container is either very small or non-existent. The filled beverage container is accommodated in an inner volume of a pressure chamber of the beverage dispensing system.

Before a user may start beverage dispensing operations, the pre-filled collapsible container must be installed into the pressure chamber of the beverage dispensing system. The pressure chamber is thereby opened and the beverage container installed therein, whereafter the pressure space is sealed and pressurized. The pressure in the pressure chamber prevents any major loss of carbonization of the beverage and allows the beverage to be propelled to the tapping system via a tapping line by compressing the beverage container. When the beverage container is empty it has collapsed and may be removed from the inner volume by opening the pressure chamber.

A drawback of the above-mentioned beverage dispensing system is that the beverage container normally cannot be inspected without difficulty after installation due to the pressurized inner volume. An inspection can only be carried out after first releasing the pressure inside the pressure chamber. Typically, a beverage container remains up to several weeks inside the pressure chamber and during this time the beverage dispensing system may be used by many people. Therefore, the user wishing to dispense beverage cannot easily determine the remaining amount of beverage in the beverage dispensing system. In contrast, it is very simple for a user to determine the remaining amount of beverage in a bottle or can by either estimating the weight of the beverage in the container or alternatively performing a visual inspection.

A user wishing to perform a series of beverage dispensing operations, e.g. to fill several beverage glasses with beverage for a group of people, may occasionally be operating a beverage dispensing system having an insufficient amount of beverage remaining in the beverage container. The user may therefore occasionally have to interrupt beverage dispensing when the beverage container is empty. Such interruptions are very annoying, especially in case only a few members of the group have been served. If the user were able to have at least an estimate of the remaining beverage, the user might want to use another beverage dispensing system or arrange for a new cool beverage container to be installed in the beverage dispensing system before initiating the beverage dispensing operations. Therefore technologies are needed for estimating the amount of beverage remaining in the beverage container without the need of performing an estimation of the weight or a visual inspection.

One way of determining the volume of the remaining beverage in the collapsible container would be to measure and store the volume of the out-flowing beverage of a beverage container having a pre-determined volume. However, not all beverage containers have a predetermined volume, e.g. when a beverage container from which some beverage has already been dispensed is installed in the beverage dispensing system. Further, as carbonated beverage, such as beer, generates at least some amount of foam during dispensing, foam may already be generated in the dispensing line leading from the beverage container to the tapping system. Such foam causes the volume of beverage to expand and renders the flow measurements to be less accurate. This may lead the user to believe that less beverage is remaining in the beverage container. Furthermore, measuring the outflow of beverage is undesired since this would necessitate mechanical parts contacting the beverage. Typically, for hygienic reasons all parts contacting the beverage in modern beverage dispensing systems are replaceable and of single use only. This would require the measurement system to be replaceable and thus very expensive.

In the prior art several approaches have been made for measuring the beverage remaining in the beverage container. Some techniques are based on the position of a dispensing valve or beverage tap. One example of an apparatus utilizing the position of the valve or tap to calculate remaining content is described in US 4,225,057 A, which apparatus uses position detecting means coupled to a beverage outlet to detect a movement between an open and a closed position of the outlet. A predetermined flow rate through the outlet allows the calculation of the total amount of fluid passing. Alternatively, as described in US 5,511,694, a calculation of the time during which the handle has been in an open position is used to calculate the remaining volume, which is then shown on a display.

A refined solution is disclosed in US 2008/0071424 which describes a fluid flow measuring system based on a positional flow sensing device coupled to a control valve dispensing mechanism for converting positional information to flow volume using transfer functions based on pressure, line diameter, etc. A compact solution is disclosed in US 7,096,617 B2 in which a tap handle is illuminated by a light source. A motion sensor in the tap handle starts a timer when the tap is moved, which, after reaching a predetermined time, interrupts electrical power to the light source, indicating that the keg is almost empty. In addition to the above documents, references were found which calculate the remaining volume based on actions of other elements of a dispensing device, such as US 7,337,920 B2 which uses a stepping motor to dispense a flavoring fluid, the number of dispenses and the volume of each dispense being used to calculate a remaining volume. Another example is EP 1 218 286 B1 in which a volume counter and a memory are mounted on a keg, the amount tapped being used to indicate when a keg is nearly empty.

A number of prior art technologies use the pressure to measure the content of a keg. US 3,311,267 A discloses a sight tube connected to the beer tap line and the headspace, thus allowing the level of beer in the container to be read. Further documents describing technologies which are utilizing the pressure difference between the beverage in the container and the headspace gas are: GB 1 223 848 A, US 3,956,934 A, GB 1 577 499 A, GB 2 077 432 A, GB 2 099 584 A, EP 2 065 685 A2, US 2009/0165477 A1. In addition, a method for measuring the volume of a malted beverage packed in a bag in a large tank is disclosed in EP 0 791 810 A2 in which a detachable pipe bend in the bag has a pressure difference sensor. A further reference disclosing a gauge tube is EP 2 041 525 A1 in which the gauge tube is pressurized to the same pressure as the liquid in the container. A variant on differential pressure techniques for determining the liquid level in a container is disclosed in GB 2 192 989 A in which gas is forced into a spear having an opening at the bottom of the keg. When bubbles start to rise from the opening, the difference in pressure between the supplied gas and the headspace of the keg indicates the level of beverage. A similar technique is described in published GB 2 094 474. Pressure may also be used to measure flow, as described in EP 0 414 156 A2 in which a flow meter includes a line segment of known length, size and material, providing a measurable pressure difference owing to the drag therein. In WO 2004/050537 A2 a technology is described in which the remaining volume of beverage in the beverage container is determined by using the time rate of change of pressure rise in the keg subsequent to a normal dispense cycle. However, this will require a constant rate of gas filling, which may be difficult to obtain by using standard hardware. Pressure fluctuations within the system may also introduce errors in the mathematical determination of the time rate of change of pressure rise.

Yet further prior art technologies determine the volume of the beverage flowing out of the beverage container indirectly by measuring in-flowing gas which substitutes the out-flowing beverage. In this way the problems associated with the direct measuring of the beverage flowing out of the beverage container is avoided. The in-flow of pressuring gas into a container is measured in the technology presented in EP 2 053 014 A1. The remaining amount of the beverage in the beverage container is thereby calculated based on the flow rate of the gas. The drawback of such indirect measurement methods is the possibility of cumulative systematic errors which may significantly affect the end result, i.e. the determination of the volume of beverage in a near empty beverage container. A similar technique for a bottle is described in EP 2 091 858 A1 where a pourer spout has an airflow measurement unit for measuring the inflow of air into a container on which the spout is mounted, and thereby the dispensed volume may be determined.

Further prior art references use the weight of a beverage container to determine the remaining contents. One example has been described in DE 35 11 224 in which a device for registering the liquid content from beverage containers comprises sensors for the container weight. Further references are US 5,837,944 A, GB 2 354 080 A and US 7,255,003 B2. Weight measurements have also been used to dispense a predetermined weight of beverage by monitoring the reduced weight of a supply keg as described in US 5,007,560 A.

Further, temperature-sensitive liquid crystals have been used to detect the liquid level in a container.

In US5894089A a technology is disclosed in which an indicator for detecting a liquid level is described, comprising a vessel having a thermo-sensitive tape wherein during use a hot or cold fluid is poured into the vessel whereby the vessel is pressed against the wall of a container, providing a colour change at the level of liquid in the container. The colour change is caused by the differing heat transport properties of the headspace and the liquid in the container. Further references include US 6,260,414 B1, US 6,925,872 B2 and US 7,302,846 B2. An alternative technique is described in EP 1 009 978 A1 in which a handheld device includes temperature-sensitive means for determining the level of a fluid in a container, further including a microprocessor for calculating the amount of fluid in the container.

Further, electrodes have been used to detect a liquid level, one reference being GB 2 170 602 A, in which the level of a liquid in a vessel is measured using the capacitance between first and second electrical conductors positioned at first and second levels, the capacitance varying with the liquid level. Current flowing between two detectors may also be used to determine whether the detectors are covered by a liquid, as is described in US 4,732,297 A.

Further, light has been used to detect a liquid level in a container. GB 2 273 560 A describes a liquid detection apparatus having a photoelectric sensor for determining when the level of liquid has decreased below a predetermined level. The difference in refractive index between the liquid and the gas in the headspace affects the internal reflection in the sensor. The flow of liquid may also be detected by light as described in US 6,819,250 B2 in which a liquid sensor comprises a light transmitting tubular body through which liquid flows, and a photo sensor mounted on the body senses the presence or absence of liquid flowing through the tubular body. Cameras have been used in beverage filling machines as described in EP 0 613 854 B1 in which liquid levels are determined using video cameras. JP 2007-278778 discloses an apparatus for inspecting liquid filled containers where the liquid level is detected by detecting X-ray light passed through the container. However, the above methods are difficult to use in combination with collapsible containers due to the unpredictable deformation of such containers during dispensing.

Ultrasound is proposed to be used for determining liquid level in EP 1 506 523, disclosing a technology in which a wireless communication device placed within a valve device of a beverage container may communicate with additional sensors to determine a liquid level through measuring the resonance of a fill tube within the container, using a piezo-electric actuator. Further, JP 2005-274204 A discloses a measuring conduit using two ultrasonic oscillators to measure the time delay of ultrasonic waves in a flow of beer to determine the flow of beer.

US 5,909,825 defines a beverage dispensing system using first and second containers, each having a float sensor to indicate the liquid level within the respective container. Further, GB 2 263 687 A discloses a flow meter having an element which is rotatable by a flow of beer. US20050194399A1 discloses a beverage dispensing system measuring beer flow by volume. The flow sensor uses a turbine and IR light to achieve a flow signal. All of the above technologies require substantial modifications to the existing beverage dispensing system.

All the above US patent documents are hereby incorporated by reference.

WO 2004/050537 discloses a home beer dispensing apparatus having a keg having a self-contained bag filled with a beer and a pressure system. The pressure system creates a pressurized air space between the keg inner walls and the bag to assist in the dispensing of the beer.

WO 2008/005564 discloses a system for dispensing fluids, especially liquid beverages, comprising a pressure sealed chamber having an interior environment with a compressible container containing the liquid beverage.

It is therefore an object of the present invention to provide technologies for the accurate measuring of the remaining volume of beverage in a beverage dispensing system. It is a further object of the present invention to provide technologies for the accurate measuring of the remaining volume without the need of any substantial modifications to the existing system, such as requiring excessive additional hardware. It is yet a further object of the present invention to provide technologies for the accurate measuring of the remaining volume, which technologies do not suffer from any systematic cumulative errors or similar mathematical errors.

Summary of the invention

The above object together with numerous other objects, advantages and features which will be evident from the below detailed description of the present invention is in accordance with a first aspect of the present invention obtained by a method for determining a volume of beverage, preferably being a carbonated beverage such as beer or soft drink, being included in a collapsible beverage container, the method comprising providing a beverage dispensing system, the beverage dispensing system including:

a pressure chamber in which the collapsible container is included, the pressure chamber defining an inner volume being equal to the sum of the volume of beverage and a residual gas volume, a pressurization system for supplying a volume of gas of atmospheric pressure from the outside of the pressure chamber to the residual gas volume, and a pressure sensor for detecting a low pressure value $p_{low}$ and a high pressure value $p_{high}$, respectively, in the inner volume, the low pressure value being equal to or higher than atmospheric pressure and the high pressure value being higher than the low pressure value,

the method further comprising the steps of:

supplying the volume of gas to the residual gas volume by using the pressurization system in response to detecting the low pressure value of the inner volume and raising the pressure in the inner volume from the low pressure value to the high pressure value,

determining the volume of gas supplied by the pressurization system from the outside of the pressure chamber to the residual gas volume in between detecting the low pressure value in the inner volume and detecting the high pressure value in the inner volume, and

establishing a measure of the volume of beverage included in the collapsible beverage container, the measure being based on the gas volume, the inner volume, the low pressure value and the high pressure value, wherein the volume of beverage $V_{bev}$ remaining in the beverage container is calculated according to

$$V_{bev} = V_{in} - \frac{n_{op} \cdot V_{spec}}{p_{high} - p_{low}}$$

wherein $V_{in}$ is the volume of the inner volume, $V_{spec}$ of atmospheric pressure introduced by each operational cycle, $n_{op}$ is the number of operation cycles performed between reaching $p_{low}$ and $p_{high}$ in the pressure chamber.

The collapsible container should be of a type deforming during beverage dispensing operations. The amount of beverage in the beverage container is at all times defined by essentially the volume of the beverage container itself, and when empty the beverage container will be completely collapsed or flat. The pressure chamber should be rigid, i.e. it should be capable of withstanding a pressure of at least a few bar above atmospheric pressure without bulging or deforming. The residual volume, being the inner volume of the pressure chamber subtracted by the beverage volume, should be rather small when a new full beverage container is introduced in the pressure chamber, such as 5%-50%, preferably 10%-20%, of the initial volume of beverage. The pressurization system may be a pump or compressor capable of introducing a pre-determined volume of atmospheric gas into the pressure chamber, independently of the pressure therein. Preferred pressurization systems include reciprocating piston pumps. The pressure sensor may e.g. be an electronic sensor or pressure switch for determining pressures around atmospheric pressure. The pressure outside the beverage dispensing system may be considered to be 1 atm or 1 bar. The low pressure value and the high pressure value may be chosen arbitrarily. However, the low pressure value may preferably be sufficiently high for allowing proper beverage dispensing, while the high pressure value may preferably be sufficiently low for not to generate excessive foaming of the dispensed beverage.

When the pressure in the inner volume has decreased below the low pressure value, irrespective of whether the decrease of pressure is the result of gas leakage from the inner volume or the result of beverage dispensing operations, the pressurization system is activated to restore the high pressure. It is contemplated that some beverage dispensing systems may allow a lower pressure before activating the pressurization system, e.g. the pressurization system may not be activated before the beverage dispensing operation has been interrupted. The volume of gas being supplied to the inner volume may be determined by the pressurization system. The volume of the residual volume may be determined as the volume of gas being supplied to the inner volume divided by the difference between the high pressure value and the low pressure value. The volume of remaining beverage in the flexible container at a given time may be determined by subtracting the inner volume from the residual volume. It is contemplated that the walls of the container are thin and thus do not influence the measurement results. A control unit of the beverage dispensing system may be used for performing the calculations. The control unit which performs the calculations may include a microprocessor. The present method is preferably used during non-beverage dispensing, i.e. the pressurization system is activated during non-beverage dispensing. The method may also be used during beverage dispensing when the volume of beverage dispensed per second is substantially smaller than the volume of pressurized gas introduced into the residual volume per second by the pressurization system. The present method is measuring the remaining volume of beverage in the beverage container as an absolute volume measurement without relying on any previous measurement.

According to a further embodiment of the method, the method further includes the steps of:

dispensing beverage from the collapsible beverage container to the outside while allowing the pressure in the inner volume to decrease from a high intermediate pressure value to a low intermediate pressure value, and

establishing a measure of the volume of beverage dispensed from the collapsible beverage container, the measure being based on a previous measure of the volume of beverage included in the collapsible beverage container, the inner volume, the low intermediate pressure value and the high intermediate pressure value. The present method is preferably used during beverage dispensing while the pressurization system is deactivated. By measuring the pressure decrease during dispensing, the volume of the dispensed beverage may be determined. The remaining volume must therefore be the last determined volume of beverage subtracted from the dispensed volume of beverage. The high intermediate pressure and the low intermediate pressure may in some embodiments be the same as the high pressure value and the low pressure value. The present method uses a previous measurement of the remaining beverage volume, and thus cumulative errors may be introduced into the calculation. As soon as the beverage dispensing operations are finished, the remaining beverage in the beverage container may be determined according to the absolute volume measurement method mentioned above in order to avoid cumulative errors.

According to a further embodiment of the method, the method further includes the steps of:

establishing a post-dispensing pressure value of the inner volume, the post-dispensing pressure measure being based on a previous measure of the volume of beverage included in the collapsible beverage container, the inner volume, a predetermined volume of beverage to be dispensed and a pre-dispensing pressure value of the inner volume, and dispensing beverage from the collapsible beverage container to the outside while allowing the pressure in the inner volume to decrease from the pre-dispensing pressure value to the post-dispensing pressure value. The post-dispensing pressure value is the calculated pressure drop resulting from dispensing a pre-determined volume of beverage. The pre-dispensing pressure value is the pressure in the residual volume before dispensing is initiated. The pre-dispensing pressure may correspond to the high pressure value and the post-dispensing value may correspond to the low pressure value. By first determining how much the pressure in the residual volume would decrease from dispensing a predetermined volume of beverage when the pressurization system is deactivated, the beverage dispensing may be interrupted when reaching the calculated post-dispensing pressure value. In this way a fully automatic dispensing of a pre-determined volume of beverage may be achieved. The pre-determined volume of beverage may be one serving of beverage, e.g. 0.5 litre or 0.33 litre.

According to a further embodiment of the method, the method further includes the steps of:

dispensing beverage from the collapsible beverage container to the outside while supplying a further volume of gas to the residual gas volume by using the pressurization system and while allowing the pressure in the inner volume to change from a first pressure value to a second pressure value, determining the further volume of gas supplied by the pressurization system from the outside of the pressure chamber to the residual gas volume in between detecting the first pressure value in the inner volume and detecting the second pressure value in the inner volume, and establishing a measure of the volume of beverage dispensed from the collapsible beverage container, the measure being based on a previous measure of the volume of beverage included in the collapsible beverage container, the inner volume, the further volume of gas, the first pressure value and the second pressure value.

The present method may be used during beverage dispensing while the pressurization system is activated and is preferably used during dispensing when the volume of beverage dispensed per second is substantially equal to or larger than the amount of pressurized gas introduced into the residual volume per second by the pressurization system. The first pressure value may correspond to the high pressure value and the second pressure value may correspond to the low pressure value. Alternatively, the first and second pressure value may be equal. The present method uses a previous measurement of the remaining beverage volume, and thus cumulative errors may be introduced into the calculation. As soon as the beverage dispensing operations are finished, the remaining beverage in the beverage container may be determined according to the absolute volume measurement method mentioned above in order to avoid cumulative errors.

According to a further embodiment of the method, the method further includes the steps of:

establishing a post-dispensing pressure value of the inner volume, the post-dispensing pressure measure being based on a previous measure of the volume of beverage included in the collapsible beverage container, the inner volume, a predetermined volume of beverage to be dispensed, a pre-dispensing pressure value of the inner volume and a further volume of gas supplied by the pressurization system from the outside of the pressure chamber to the residual gas volume in between detecting the pre-dispensing pressure value in the inner volume and detecting the post-dispensing pressure value in the inner volume, and dispensing beverage from the collapsible beverage container to the outside while supplying the further volume of gas to the residual gas volume by using the pressurization system and while allowing the pressure in the inner volume to change from the pre-dispensing pressure value to the post-dispensing pressure value. In this way a predetermined volume of beverage may be dispensed similar to the method described above when the pressurization system is activated. The beverage dispensing is interrupted when reaching the calculated post-dispensing pressure value.

According to a further embodiment of the method, the pressurization system performs a number of operating cycles, each operating cycle comprising the steps of:

enclosing a pre-determined volume of gas from the outside of the pressure chamber, and
introducing the pre-determined volume of gas into the residual gas volume, the specific volume being equal to the pre-determined volume times the number of operating cycles. Such pressurization systems comprise pumps and compressors working according to the reciprocating piston principle or the like. Valves, rotors or doors may be used to enclose the pre-determined amount of gas. The pre-determined volume of gas should be compressed to the pressure of the inner volume prior to or during entry into the inner volume. The gas is typically air.

According to a further embodiment of the method, the number of operating cycles is determined by measuring the time during which the operating cycles are performed, or, alternatively, wherein the pressurization system is driven by an electrical motor and the number of operating cycles is determined by measuring the number of revolutions of the electrical motor during which the operating cycles are performed, or, yet alternatively, wherein the number of operating cycles is determined by measuring the number of pressure fluctuations occurring within the inner volume when the pressurization system is activated. In case the pressurization system is capable of supplying the same volume of air over time independent of the pressure of the inner volume and independent of the external conditions, and the drive mechanism of the pressurization system reaches the nominal working speed quickly and does not suffer from any significant start-up delay, the number of operations may be determined by the time during which the pressurization system is activated. Alternatively, the number of revolutions of an electrical motor or a flywheel connected thereto may be monitored by the use of an electrical contact or photocell or the like. Yet alternatively, the electronic sensor or pressure switch used for measuring the pressure of the inner volume may be used, since every stroke of the pressurization system yields a pressure wave into the inner chamber. By measuring the number of pressure waves, an estimate of the number of cycles can be made.

According to a further embodiment of the method, the measure of the volume of beverage is determined to be equal to the inner volume subtracted the specific volume divided by the difference between the high pressure value and the low pressure value. In case the ideal gas law is used and the temperature difference between the inside and outside of the inner volume is neglected, the above formula may be used to calculate the volume of the beverage remaining in the beverage container.

According to a further embodiment of the method, the beverage dispensing system further includes a pressure sensor for determining an outside pressure value outside the pressure chamber and/or a temperature sensor for determining an outside temperature value outside the pressure chamber, the outside pressure value and/or the outside temperature value being used for establishing the measure of the volume of beverage. The pressure decrease due to the lower temperature of the pressure chamber may be determined by monitoring the temperature outside and inside the inner volume.

According to a further embodiment of the method, the low pressure value is in the order of 1.6 bar and the high pressure value is in the order of 1.8 bar absolute pressure. The above values are typical values for achieving a good flow of beverage while avoiding excessive foaming.

According to a further embodiment of the method, the method further includes the step of presenting a visual indication being visible from the outside of the beverage dispensing system of the measure of the volume of beverage included in the collapsible beverage container, the visual indication indicating whether the measure of the volume of beverage included in the collapsible beverage container is above or below a predetermined volume value, preferably at least two predetermined volume values, such as the volume of beverage being above ¾ of the inner volume, above 1/2 of the inner volume and above ¼ of the inner volume, most preferably the visual indication being a continuous indication of the measure of the volume of beverage included in the collapsible beverage container, such as a gauge. Preferably, some visual indication is given about the amount of remaining beverage. The indication may e.g. be an analogue or digital gauge, one or more lights or the like. According to a further embodiment of the method, the method further includes a linear compensation for wear and tear of the pressure device by monitoring the total time of operation of the pressurization system. The applicant has found that the wear and tear causes a leakage of the pressurization system which is essentially linear with respect to the time of operation of the beverage dispensing system. The calculation unit may compensate for such leakage of the pressurization system.

The above object together with numerous other objects, advantages and features which will be evident from the below detailed description of the present invention is in accordance with a second aspect of the present invention obtained by a beverage dispensing system comprising:

a pressure chamber for accommodating a collapsible container containing a volume of beverage, preferably a carbonated beverage such as beer, soda, cola, tonic and the like, the pressure chamber defining an inner volume being equal to the sum of the volume of beverage and a residual gas volume,
a pressure sensor for detecting a low pressure value

$p_{low}$ and a high pressure $p_{high}$, respectively, in the inner volume, the low pressure value being equal to or greater than atmospheric pressure, the high pressure value being greater than the low pressure value, and

a pressurization system for supplying gas to the residual gas volume in response to detecting the low pressure value of the inner volume and raising the pressure in the inner volume from the low pressure value to the high pressure value, the beverage dispensing system determining the specific volume of gas which has been received by the pressurization system from the outside of the pressure chamber, compressed by the pressurization system and introduced into the residual gas volume in between detecting the low pressure value in the inner volume and detecting the high pressure value in the inner volume and establishing a measure of the volume of beverage included in the collapsible beverage container, the measure being based on the specific gas volume, the inner volume, the low pressure value and the high pressure value, and said pressurization system includes a housing, a reciprocating piston operating within said housing and a one-way valve, each operating cycle including a forward and a subsequent backward stroke of said piston, said specific volume being equal to said volume covered by each stroke of said piston, or alternatively, wherein said pressurization system includes a housing and a rotating member operating within said housing, each operating cycle including a 360 degree rotation of said rotating member, said specific volume being equal to said volume covered by said rotating member during the 360 degree rotation, wherein the beverage dispensing system comprises a control unit for calculating the volume of beverage $V_{bev}$ remaining in the beverage container according to

$$V_{bev} = V_{in} - \frac{n_{op} \cdot V_{spec}}{p_{high} - p_{low}}$$

wherein $V_{in}$ is the volume of the inner volume, $V_{spec}$ of atmospheric pressure introduced by each operating cycle, $n_{op}$ is the number of operation cycles performed between reaching $p_{low}$ and $p_{high}$ in the pressure chamber.

It is contemplated that the system according to the second aspect may be used together with the method according to the first aspect.

According to a further embodiment of the method, the pressurization system includes a housing, a reciprocating piston operating within the housing and a one-way valve, each operating cycle including a forward and a subsequent backward stroke of the piston, the specific volume being equal to the volume covered by each stroke of the piston, or alternatively, wherein the pressurization system includes a housing and a rotating member operating within the housing, each operating cycle including a 360 degree rotation of the rotating member, the specific volume being equal to the volume covered by the rotating member during the 360 degree rotation. The pressurization system may thus comprise pumps and compressors both of a reciprocating piston type and of a capsule type.

According to a further embodiment of the method, the inner volume is in the range of 5 litres to 50 litres, such as between 5-10 litres, 10-20 litres, 20-30 litres, 30-40 litres or 40-50 litres. Typical volumes of private systems are between 5-10 litres and of professional systems between 10 -50 litres.

According to a further embodiment of the method, the pressure in the inner space during dispensing remains lower or equal to the low pressure value, preferably within the range of 1.3 and 1.6 bar, such as within the range 1.4 and 1.5 bar. It is contemplated that the pressure may be allowed to decrease to a value being lower that the low pressure value.

Brief description of the drawings

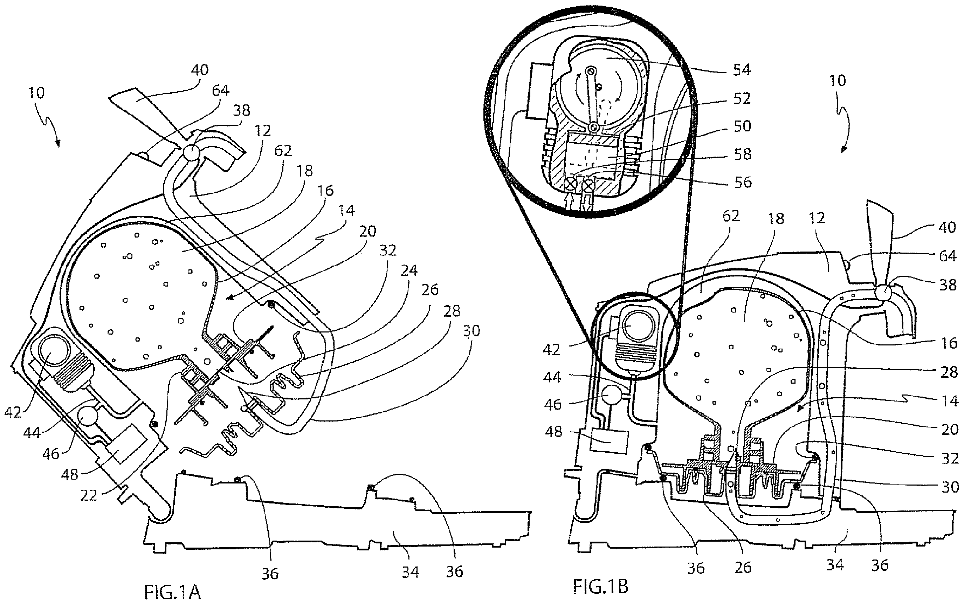

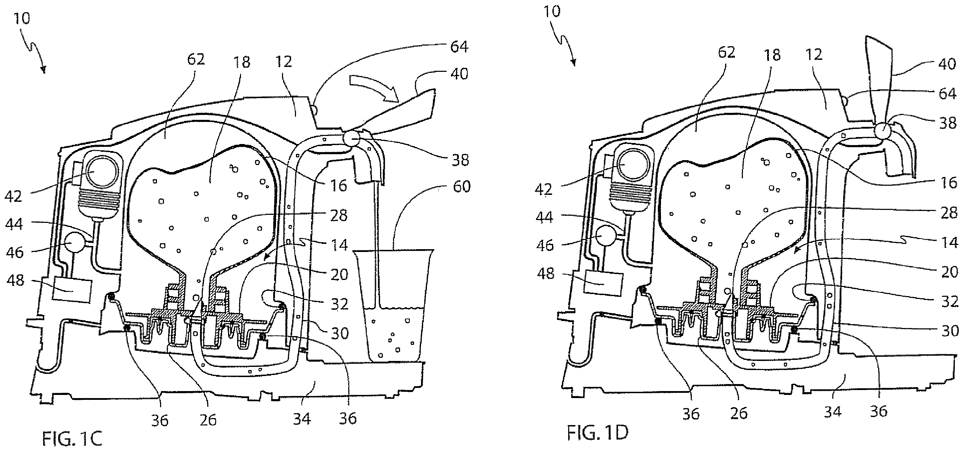

Figure 1A is a vertical sectional view of a beverage dispensing system according to the present invention in an open state.
Figure 1B is a vertical sectional view of a beverage dispensing system according to the present invention in a closed state.
Figure 1C is a vertical sectional view of a beverage dispensing system according to the present invention in a beverage dispensing state.
Figure ID is a vertical sectional view of a beverage dispensing system according to the present invention in a pressure-restoring state during non-beverage dispensing.
Figure IE is a vertical sectional view of a beverage dispensing system according to the present invention in a pressure-restoring state during non-beverage dispensing.
Figure 2 is a vertical sectional view of a further embodiment of a beverage dispensing system according to the present invention in a dispensing and pressure-restoring state.
Figure 3 is a vertical sectional view of yet a further embodiment of a beverage dispensing system according to the present invention in a dispensing state.
Figure 4 is a perspective view of a further embodiment of a beverage dispensing system according to the present invention.
Figure 5 is a plot of the number of operational cycles over the volume in litres of air introduced into the beverage dispensing system.

Detailed description of the drawings

Fig. 1A is a vertical sectional view of a beverage dispensing system 10. The beverage dispensing system 10 comprises a housing 12 and an inner volume 14 constituting a pressure chamber. The inner volume 14 is typically chilled by a cooling element (not shown). The inner volume 14 contains a flexible beverage container 16 filled with carbonated beverage 18. The beverage container 16 is fixated to a base plate 20 of rigid plastic by e.g. click-fit to a set of flanges 22 of the beverage container 16. The beverage container 16 comprises an outlet 24 which is initially sealed by a pierceable membrane at the base plate 20. The base plate 20 of the beverage container 16 is fixated to the housing 12 by a base part 26. The base part 26 comprises a piercing element 28 which is in fluid communication with a dispensing line 30. When a new beverage container 16 is installed, the base part 26 is juxtaposing the base plate 20 of the beverage container 16 such that the beverage outlet 24 is pierced by the piercing element 28 and the dispensing line 30 is put in fluid communication with the beverage 18. The base part 26 is releasably connected to the housing 12, e.g. by a snap-fit or screw fit. When connected to the housing 12, the base part 26 applies a force onto the base plate 20, thereby fixating the beverage container 16 onto the housing 12 in a stable and secure way. A seal 32 seals the base part 26 onto the housing 12. The housing further comprises a base unit 34 for sealing off the inner volume 14. The base unit 34 includes a drip tray. During the installation of the beverage container 16, the housing 12 is pivoted away from the base unit 34 for allowing the base part 26 to be removed and a beverage container 16 to be introduced into the inner volume 14 of the housing 16. The base unit 34 seals to the housing 12 by further seals 36.

The dispensing line 30 transports the beverage 18 from the inside of the beverage container 16 to a tapping valve 38 located outside the inner volume 14. The tapping valve 38 is controlled by a tapping handle 40. The tapping valve 38 controls the flow of beverage 18 to the outside of the housing 12. The housing 12 further comprises a pressurization system 42, which may be a pump or a compressor. The pressurization system 42, which will be described in more detail in connection with Fig. IB, communicates with a channel 44 leading into the inner volume 14 of the housing 12. The channel 44 further communicates with an electronic sensor or pressure switch 46 for measuring the pressure inside the inner volume 14. The beverage dispensing system 10 further comprises a control unit 48. The control unit 48 is connected to the electronic sensor or pressure switch 46 and the pressurization system 42. The control unit 48 receives information about the pressure inside the inner volume 14 and starts the pressurization of the inner volume 14 in case the pressure in the inner volume 14 is below a predetermined minimum dispensing pressure, such as e.g. 1.4 bar or 1.6 bar absolute pressure. The control unit 48 further receives information about whether or not a beverage container 16 is installed in the inner volume 14 and whether or not the housing 12 is pivoted into its open position, or if it is closed and sealed onto the base unit 34. In case no beverage container is installed into the inner volume 14 or in case the housing 12 is pivoted into its open position, the inner volume 14 cannot be pressurized. Preferably, the control unit 48 also receives information whether or not the tapping handle 40 is in its vertical, non-dispensing orientation. In case the tapping handle is shifted to its horizontal, beverage-dispensing orientation, i.e. allowing beverage to flow out, the volumetric measurement will be influenced, and thus it is preferred that the inner volume is pressurized while the tapping handle 40 is in its vertical orientation, i.e. preventing beverage from flowing out. In alternative embodiments it may be actively prevented to swing the tapping handle 40 when the pressurization system 42 is activated.

Fig. 1B is a vertical sectional view of the beverage dispensing system 10 when the inner volume 14 is pressurized. The housing 12 has consequently been pivoted back to its closed position and the inner volume 14 has been sealed by the base part 26 and the base unit 34. The surface of the beverage container 16 has been slightly deformed due to the pressure in the inner volume. Typically, the maximum pressure inside the inner volume 14 is about 2 bar, such as 1.8 bar, absolute pressure in order to have a suitable pressure for achieving a suitable beverage flow without too much foaming of the beverage.

In the present view some more details of the pressurization system 42 are shown in the close-up part of the figure. The pressurization system 42 comprises an inner cylindrical cavity 50 in which a piston 52 is reciprocating. The piston 52 and the inner surface of the cylindrical cavity 50 form a tight fit. The piston is connected to a flywheel 54 which is driven by an electrical motor (not shown). The electrical motor is preferably connected to a mains electrical outlet. The electrical motor is controlled by the control unit 48. When the pressure in the inner volume 14 decreases below the minimum dispensing pressure, the electrical motor (not shown) is activated to turn the flywheel as shown by the arrows. Each turn of the flywheel constitutes an operational cycle of the pressurization system 42 in which the piston travels from a top position a specific length L downwardly to a bottom position adjacent the bottom of the inner cavity 50 and again the same distance L upwardly to the top position. The words bottom, top, upwardly and downwardly should be interpreted in the context of the figure. It is contemplated that a pressurization system as shown in Fig. 1B may run in an arbitrary direction. The inner cavity 50 comprises a first one-way valve 56, allowing a flow of pressurized air to flow from the bottom of the inner cavity 50 into the inner volume 14 when the piston 52 is travelling downwardly, while preventing flow of air in the opposite direction. The inner cavity 50 further comprises a second one-way valve 58, allowing a flow of pressurized air to flow from the outside of the beverage dispensing system 10 into the inner cavity 50 when the piston 52 is travelling upwardly, while preventing flow of air in the opposite direction. Each operational cycle of the pressurization system 42 will thus pressurize and introduce a predetermined volume of air of atmospheric pressure into the inner volume 14. The specific volume of air $V_{spec}$ of atmospheric pressure introduced by each operational cycle may be calculated as:

$$V_{spec} = A_{spec} \cdot L_{spec}$$

wherein $A_{spec}$ is the area of the piston and $L_{spec}$ is the length between the top position of the piston and the bottom position of the piston. A volumetric measurement is performed each time the pressure is increased from 1.6 bar in the pressure chamber to 1.8 bar in the pressure chamber as further described below.

The flywheel 54 is connected to the control unit 48. The control unit 48 thereby receives information about the number of operational cycles performed by the pressurization system 42. During pressurization of the inner volume 14, the number of operating cycles required to increase the pressure from the low pressure value = 1.6 bar to the high pressure value = 1.8 bar is stored in the calculation unit 48. Since beverage is a liquid and consequently substantially non-compressible, and the outside pressure is determined to be one bar, the total volume of beverage $V_{bev}$ remaining in the beverage container may be calculated according to the ideal gas law as:

$$V_{bev} = V_{in} - \frac{n_{op} \cdot V_{spec}}{p_{high} - p_{low}}$$

wherein $V_{in}$ is the volume of the inner volume, $V_{spec}$ of atmospheric pressure introduced by each operational cycle, $n_{op}$ is the number of operation cycles performed between reaching $p_{low}$ = 1.6 bar in the pressure chamber and reaching $p_{high}$ = 1.8 bar in the pressure chamber. The measurement is absolute, i.e. it is thus not necessary to know the initial volume of beverage in the beverage container 16 before installing it into the inner volume 14. It is understood that the volume of air of atmospheric pressure $V_{spec}$ will compress as it is entering the inner volume 14, which typically has a higher pressure compared to the outside of the inner volume 14.

Fig. 1C is a vertical sectional view of the beverage dispensing system 10 during dispensing. When the handle 40 is swung from its initial vertical orientation towards a horizontal orientation, the tapping valve 38 will open and beverage 18 will start to flow though the valve 38 to the outside of the beverage dispensing system 10. Preferably, a glass 60 is then positioned below the tapping valve 38 to receive the beverage 18. The beverage 18 is driven though the dispensing line 30 by the pressure in the inner volume 14. The surface of the beverage container 16 has been moderately deformed due to the pressure in the inner volume 14 and the out-flowing beverage. The beverage container 16 keeps its upright position during the dispensing. The beverage container 16 will deform due to the pressure of the inner volume and the out-flowing beverage 18, and at least the upper part of the beverage container 16 will be compressed into a more or less random shape. The deformation of the beverage container 16 will result in the establishment of a residual air volume 62 above the beverage container 16. As the beverage container 16 collapses, the air volume 62 will increase. The pressure in the air volume 62 should be higher than the ambient pressure outside the beverage dispensing system 10, thereby pushing the beverage through the dispensing line 30 when the tapping valve 38 is shifted to an open position. The beverage container 16 is preferably made of PP, a flexible material which will deform as the beverage volume is reduced, until the beverage 18 is completely drained.

Fig. ID shows the beverage dispensing system 10 when the pressurization system 42 is reactivated after dispensing. In case the pressure in the inner volume 14 has decreased below 1.6 bar, the pressurization system 42 is reactivated and the pressure in the inner volume 14 is increased to 1.8 bar and a new volumetric measurement is performed as described above. In this way a new measurement is made essentially after each dispensing operation for an accurate updating of the amount of beverage 18 remaining in the beverage container without any cumulative errors. Further, the beverage dispensing system 10 may compensate for any leakage by re-pressurizing the inner volume 14 each time the pressure decreases below 1.6 bar, at which time a new volumetric measurement is performed as described above.

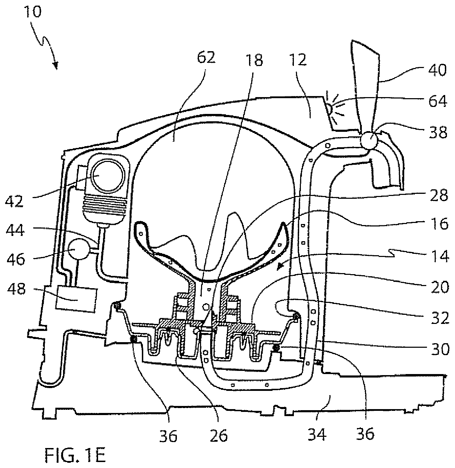

Fig. 1E shows the beverage dispensing system 10 when the beverage 18 is nearly emptied out and the beverage container 16 has been almost completely deformed. The user is then, before the beverage container is completely empty, alerted by a visual indication 64 which may be e.g. a flashing lamp. The user may then introduce a new beverage container by pivoting the housing 12 of the beverage dispensing system 10 and removing the base part 26.

It should be noted that in case the re-pressurization of the inner volume 14 is performed quickly in relation to the dispensing of beverage, i.e. if the volume of pressurized air introduced per second by the pressurization system is large compared to the volume of beverage dispensed per second, re-pressurization and volumetric measurements may be performed irrespective of beverage dispensing. However, in case the re-pressurization is comparable to or slower than the dispensing of beverage, i.e. if the volume of pressurized air introduced per second by the pressurization system is less than or substantially equal to the volume of beverage dispensed per second, the beverage dispensing will influence the volumetric measurement.

In the present embodiment, the number of operating cycles is determined by the number of turns of the flywheel 54. The number of turns may be determined e.g. by the use of electrical contacts, photocells etc. Other alternative ways of determining the number of operating cycles include determining the number of turns of the electrical motor, determining the number of strokes of the piston 52 and determining the number of pressure pulses received at the electronic sensor or pressure switch 46.

In the present embodiment, it is assumed that the temperature inside the inner volume 14 is kept at a constant low temperature of about 5 degrees C. In the formulas presented here, the temperature effect causing a reduced pressure when the temperature is reduced at constant volume has been neglected. The cooling of the outside air, presumably at room temperature, will cause a measurement error of a few percent. The calculation unit may compensate for this error for a more precise volumetric measurement.

It is contemplated that the above method may be used in reverse in order to dispense a predetermined volume of beverage instead of measuring the volume of beverage remaining.

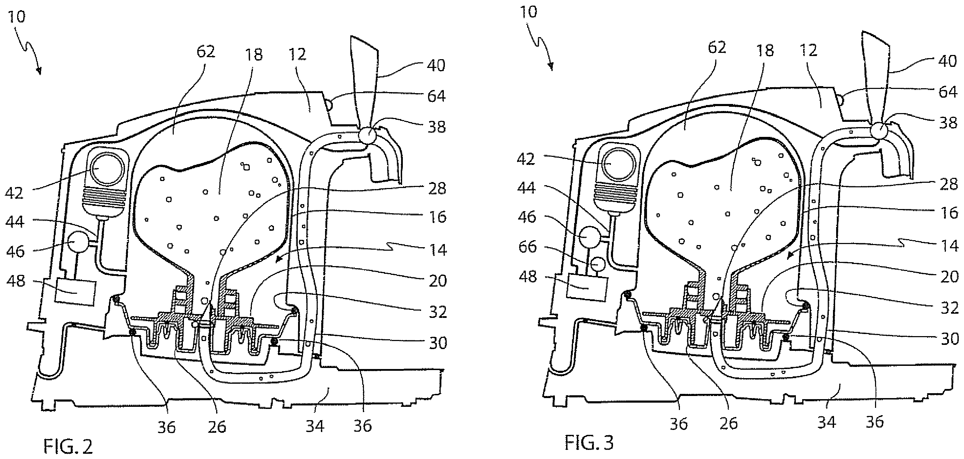

Fig. 2 shows an alternative embodiment of the beverage dispensing system 10'. The alternative embodiment of the beverage dispensing system 10'includes all of the features of the previous presented embodiment of Fig. 1A-E, but further allows re-pressurization of the inner volume 14 by using the pressurization system 42 simultaneously with dispensing beverage by swinging the handle 40, even in case the re-pressurization is comparable to or slower than the dispensing of beverage. In the event the tapping handle 38 is swung from the vertical orientation to the horizontal position, i.e. allowing beverage to be dispensed, the pressurization system 42 may be configured to allow the pressure to decrease to 1.6 bar, whereafter the pressure, if possible, is kept constant. The volume of beverage $V_{bev}$ remaining in the beverage container 16 may during the dispensing operation be calculated by making a calculation relative to a previous determination of the remaining volume of beverage according to the ideal gas law:

$$V_{bev} = V_{bev\_old} - \frac{p_{high} \cdot (V_{in} - V_{bev\_old})}{p_{low}} \cdot - \frac{V_{spec}}{p_{low}}$$

wherein the first term $V_{bev\_old}$ is the previously determined volume of the beverage 18 remaining in the beverage container 16, the second term $\frac{p_{high} \cdot (V_{in} - V_{bev\_old})}{p_{low}}$ represents the increase of the air volume in the pressure chamber during dispensing and non-operation of the pressurization system 42, and the third term $\frac{n_{op} \cdot V_{spec}}{p_{low}}$ represents the volume of the dispensed beverage during dispensing and pressure held constant by the pressurization system 42. The calculation according to the above-mentioned formula may be used e.g. in case the tapping handle 40 is swung during re-pressurization or in the event that the pressure inside the pressure chamber falls below 1.6 bar, e.g. 1.4 bar. The above method has the drawback that the result depends on the previously determined volume of the beverage container, i.e. cumulative errors may occur. After the dispensing operation is finished, an absolute measurement as described above in connection with Figs. 1A-E should therefore be performed.

It is understood that a relative measurement of the volume of remaining beverage as described above may also be performed when the tapping valve 38 is in the non-beverage dispensing position as a complement to the absolute volume measurement. It should however be remembered that the relative measurement as described here does not take into account the effect of leakage of air from the pressure chamber.

Fig. 3 shows an alternative embodiment of the beverage dispensing system 10" in which the number of operation cycles is determined by the time of operation of the pressurization system 42. In case the pressurization system is capable of supplying a constant flow of air independent of the pressure in the inner volume 14, and start-up/shut-down effects of the electrical motor (not shown) may be neglected, the volume of air of atmospheric pressure pressurized and introduced into the inner volume 14 is directly proportional to the time during which the electrical motor of the pressurization system 42 is activated. Thus, a clock 66 connected to the control unit 48 and to the electrical motor (not shown) may be used to determine the volume of air introduced into the inner volume 14. The clock 66 is reset and started when the pressurization system 42 is started, and stopped when the pressurization system 42 is stopped, and the volume of air of atmospheric pressure pressurized and introduced into the inner volume 14 is calculated based on the time measured by the clock 66.

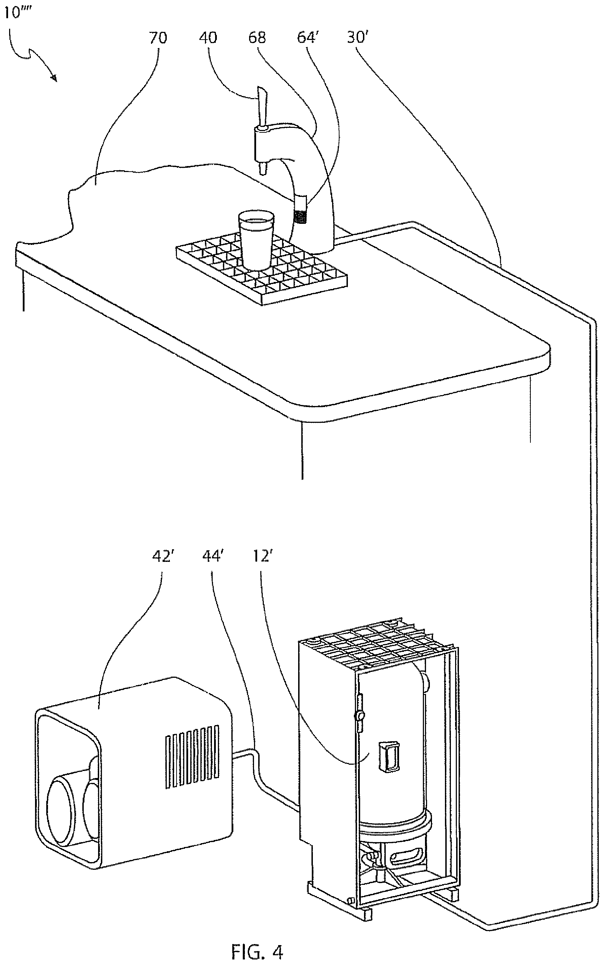

Fig. 4 shows a further embodiment of a beverage dispensing system 10'" according to the present invention. The present embodiment constitutes a professional modular system in which a housing 12' for accommodating the beverage container (not shown) is located at a distant location in relation to a tapping rod 68 in which a tapping valve (not shown) is included. The tapping rod 68 is located on a bar counter 70 situated in a pub, bar, restaurant, party room or the like. The tapping valve (not shown) inside the tapping rod 68 is controlled by a handle 40. A dispensing line 30' interconnects the tapping valve (not shown) of the tapping rod 68 and the housing 12'. The housing 12' may be located in a location not accessible to the public such as in a basement, kitchen, backroom or the like. The housing 12' includes an inner chamber (not shown) for accommodating the beverage container (not shown). The inner chamber (not shown) of the housing 12' is connected to a pressurization system 42' via a channel 44'. The pressurization system 42', which may be a larger variant of the pressurization system 42 described above, is capable of introducing a specific volume or air into the inner space (not shown) of the housing 12' per operational cycle. The pressure inside the inner space (not shown) of the housing 12' is measured by an electronic sensor or pressure switch or the like. The volumetric measurement is then performed as described above. The remaining amount of beverage inside the beverage container (not shown) of the housing 12' may be displayed on a visual indicator 64' on the tapping rod 68'. The above dispensing system is as such known from the applicants previous patent applications, e.g. WO2009/024147.

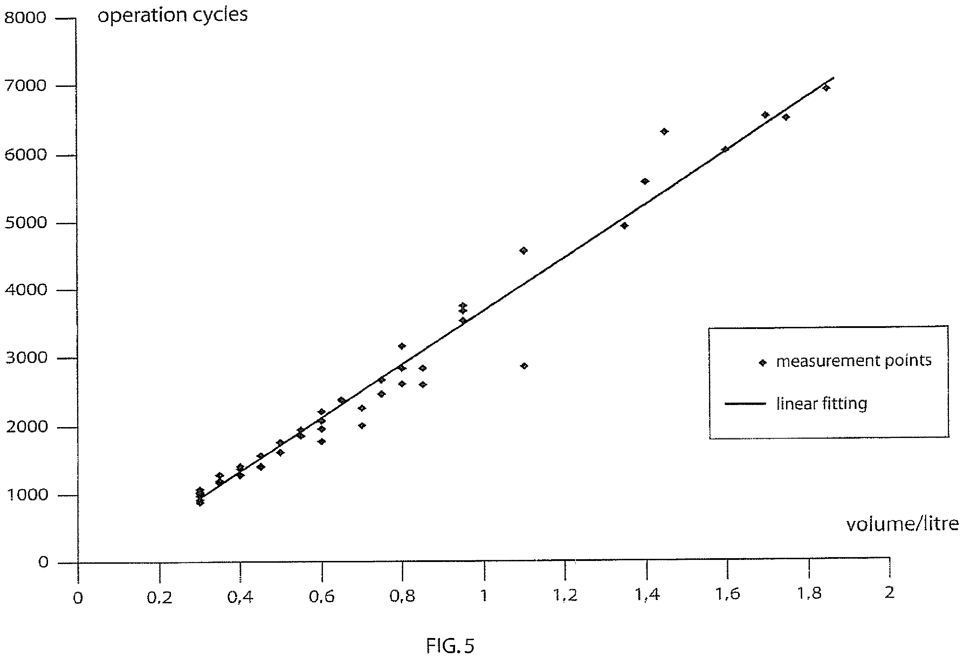

Fig. 5 shows tables and a plot of the number of operational cycles (r=revolutions) of the pressurization system as a function of the volume of air (litres) introduced into the inner volume. The applicant has performed extensive experiments to determine that there is a linear relationship between the number of operational cycles of the pressurization system and the volume of air (in litre) introduced into the inner volume of the beverage dispensing system. The results of the experiments are shown in tables 1 and 2 and in the plot of fig 5.

Table 1

| r | litre m | litre c | diff |
|---|---|---|---|
| 1171 | 0,35 | 0,32 | 0,03 |
| 882 | 0,3 | 0,24 | 0,06 |
| 1012 | 0,3 | 0,28 | 0,02 |
| 1036 | 0,3 | 0,28 | 0,02 |
| 1189 | 0,35 | 0,33 | 0,02 |
| 1272 | 0,4 | 0,35 | 0,05 |
| 1405 | 0,4 | 0,39 | 0,01 |
| 1567 | 0,45 | 0,43 | 0,02 |
| 1749 | 0,5 | 0,48 | 0,02 |
| 1848 | 0,55 | 0,51 | 0,04 |
| 1948 | 0,6 | 0,54 | 0,06 |
| 2066 | 0,6 | 0,57 | 0,03 |
| 2364 | 0,65 | 0,65 | 0 |
| 2456 | 0,75 | 0,68 | 0,07 |
| 2660 | 0,75 | 0,73 | 0,02 |
| 2600 | 0,8 | 0,72 | 0,09 |
| 3151 | 0,8 | 0,87 | -0,07 |
| 3666 | 0,95 | 1,01 | -0,06 |
| 4549 | 1,1 | 1,25 | -0,15 |

(continued)

| r | litre m | litre c | diff |
|---|---|---|---|
| 4900 | 1,35 | 1,35 | 0 |
| 5551 | 1,4 | 1,53 | -0,13 |
| 6001 | 1,6 | 1,65 | -0,05 |
| 6501 | 1,7 | 1,79 | -0,09 |
| 6888 | 1,85 | 1,89 | -0,04 |
| 68432 | 18,8 | 18,82 | -0,02 |

Table 2

| r | litre m | litre c | diff |
|---|---|---|---|
| 1042 | 0,3 | 0,29 | 0,01 |
| 907 | 0,3 | 0,25 | 0,05 |
| 972 | 0,3 | 0,27 | 0,03 |
| 1071 | 0,3 | 0,29 | 0,01 |
| 1166 | 0,35 | 0,32 | 0,03 |
| 1276 | 0,35 | 0,35 | 0 |
| 1371 | 0,4 | 0,38 | 0,02 |
| 1396 | 0,45 | 0,38 | 0,07 |
| 1410 | 0,45 | 0,39 | 0,06 |
| 1610 | 0,5 | 0,44 | 0,06 |
| 1931 | 0,55 | 0,53 | 0,02 |
| 1767 | 0,6 | 0,49 | 0,11 |
| 2201 | 0,6 | 0,61 | -0,01 |
| 2000 | 0,7 | 0,55 | 0,15 |
| 2249 | 0,7 | 0,62 | 0,08 |
| 2450 | 0,75 | 0,67 | 0,08 |
| 2827 | 0,8 | 0,78 | 0,02 |
| 2581 | 0,85 | 0,71 | 0,14 |
| 2827 | 0,85 | 0,78 | 0,07 |
| 3522 | 0,95 | 0,97 | -0,02 |
| 2849 | 1,1 | 0,78 | 0,32 |
| 3731 | 0,95 | 1,03 | -0,08 |
| 4543 | 1,1 | 1,25 | -0,15 |
| 4802 | 1,35 | 1,32 | 0,03 |
| 6275 | 1,45 | 1,73 | -0,28 |
| 6458 | 1,75 | 1,78 | -0,03 |
| 65234 | 18,75 | 17,94 | 0,81 |

The pressurization system is provided with a counter for determining the number of operating cycles or revolutions. The tables show the number of operating cycles (r=revolutions), the measured volume of air introduced into the inner volume (litre m=measured value), the calculated volume of air introduced into the inner volume (litre c=calculated value) and the difference (diff) between measured value and calculated value. The plot shows the number of operational cycles of the pressurization system as a function of the volume of air (in litre) The points represent experimental results and the line is a curve which has been linearly fitted to the experimental results. From the plot it can be seen that the relationship between the number of operational cycles of the pressurization system and the volume of air introduced into the inner volume of the beverage dispensing system is substantially linear. It has thereby been found out that each revolution of the pressurization system introduced 0,275ml of air of atmospheric pressure into the inner space. The experiment has been performed using a 20 litre beverage container while tapping approximately 2 litre of beverage

Although the present invention has been described above with reference to specific embodiments of the method for determining a volume of beverage and also specific embodiments of the beverage dispensing system, it is of course contemplated that numerous modifications may be deduced by a person having ordinary skill in the art of beverage dispensing. For instance, the housing and the flexible container may be replaced by a bag-in-keg or bag-in-container including a rigid outer container and a flexible inner bag. The inner space is thereby established between the outer container and the inner bag. Similar kegs have been produced and sold by various companies which are active within the field of beverage dispensing. Other variants of the above technology exist, such as a metallic can or container with an internal plastic bag, or even an inner flexible metallic bag. Further, the container may or may not include an ascending pipe, and the container may be used in an horizontal, vertical, sloped or upside down orientation when being tapped.

**Claims**

1. A method for determining a volume of beverage, preferably being a carbonated beverage such as beer or soft drink, being included in a collapsible beverage container (16), said method comprising providing a beverage dispensing system, said beverage dispensing system including:

   a pressure chamber in which said collapsible container (16) is included, said pressure chamber defining an inner volume being equal to the sum of said volume of beverage and a residual gas volume,
   a pressurization system (42) for supplying a volume of gas of atmospheric pressure from said outside of said pressure chamber to said residual gas volume, and
a pressure sensor (46) for detecting a low pressure value $p_{low}$ and a high pressure value $p_{high}$, respectively, in said inner volume, said high pressure value being higher than said low pressure value,

said method further comprising the steps of:

supplying said volume of gas to a residual gas volume by using said pressurization system in response to detecting said low pressure value of said inner volume and raising said pressure in said inner volume from said low pressure value to said high pressure value, determining said volume of gas supplied by said pressurization system from the outside of said pressure chamber to said residual gas volume in between detecting said low pressure value in said inner volume and detecting said high pressure value in said inner volume, and establishing a measure of said volume of beverage included in said collapsible beverage container, said measure being based on said gas volume, said inner volume, said low pressure value and said high pressure value, **characterised in that** said low pressure value being higher than atmospheric pressure, and that the volume of beverage $V_{bev}$ remaining in the beverage container is calculated according to

$$V_{bev} = V_{in} - \frac{n_{op} \cdot V_{spec}}{p_{high} - p_{low}}$$

wherein $V_{in}$ is the volume of the inner volume, $V_{spec}$ of atmospheric pressure introduced by each operational cycle, $n_{op}$ is the number of operation cycles performed between reaching $p_{low}$ and $p_{high}$ in the pressure chamber.

2. The method according to claim 1, said method further including the steps of:

dispensing beverage from said collapsible beverage container to said outside while allowing said pressure in said inner volume to decrease from a high intermediate pressure value to a low intermediate pressure value, and establishing a measure of said volume of beverage dispensed from said collapsible beverage container, said measure being based on a previous measure of said volume of beverage included in said collapsible beverage container, said inner volume, said low intermediate pressure value and said high intermediate pressure value.

3. The method according to claim 1, said method further including the steps of:

establishing a post-dispensing pressure value of said inner volume, said post-dispensing pressure value being based on a previous measure of said volume of beverage included in said collapsible beverage container, said inner volume, a predetermined volume of beverage to be dispensed and a pre-dispensing pressure value of said inner volume, and
dispensing beverage from said collapsible beverage container to said outside while allowing said pressure in said inner volume to decrease from said pre-dispensing pressure value to said post-dispensing pressure value.

4. The method according to claim 1, said method further including the steps of:

dispensing beverage from said collapsible beverage container to said outside while supplying a further volume of gas to said residual gas volume by using said pressurization system and while allowing said pressure in said inner volume to change from a first pressure value to a second pressure value,
determining said further volume of gas supplied by said pressurization system from the outside of said pressure chamber to said residual gas volume in between detecting said first pressure value in said inner volume and detecting said second pressure value in said inner volume, and
establishing a measure of said volume of beverage dispensed from said collapsible beverage container, said measure being based on a previous measure of said volume of beverage included in said collapsible beverage container, said inner volume, said further volume of gas, said first pressure value and said second pressure value.

5. The method according to claim 1, said method further including the steps of:

establishing a post-dispensing pressure value of said inner volume, said post-dispensing pressure measure being based on a previous measure of said volume of beverage included in said collapsible beverage container, said inner volume, a predetermined volume of beverage to be dispensed, a pre-dispensing pressure value of said inner volume and a further volume of gas supplied by said pressurization system from the outside of said pressure chamber to said residual gas volume in between detecting said pre-dispensing pressure value in said inner volume and detecting said post-dispensing pressure value in said inner volume, and
dispensing beverage from said collapsible beverage container to the outside while supplying said further volume of gas to said residual gas volume by using said pressurization system and while allowing said pressure in said inner volume to change from said pre-dispensing pressure value to said post-dispensing pressure value.

6. The method according to any of the preceding claims, wherein said pressurization system performs a number of operating cycles, each operating cycle comprising the steps of:

enclosing a pre-determined volume of gas from the outside of said pressure chamber, and introducing said pre-determined volume of gas into said residual gas volume, a specific volume being equal to said pre-determined volume times the number of operating cycles.

7. The method according to claim 6, wherein the number of operating cycles is determined by measuring the time during which said operating cycles are performed, or, alternatively, wherein said pressurization system is driven by an electrical motor and the number of operating cycles is determined by measuring the number of revolutions of said electrical motor during which said operating cycles are performed, or, yet alternatively, wherein the number of operating cycles is determined by measuring the number of pressure fluctuations occurring within said inner volume when said pressurization system is activated.

8. The method according to any of the preceding claims, wherein the measure of said volume of beverage is determined to be equal to said inner volume subtracted by said specific volume divided by said difference between said high pressure value and said low pressure value.

9. The method according to any of the preceding claims, said beverage dispensing system further including a pressure sensor for determining an outside pressure value outside said pressure chamber and/or a temperature sensor for determining an outside temperature value outside said pressure chamber, said outside pressure value and/or said outside temperature value being used for establishing the measure of said volume of beverage.

10. The method according to any of the preceding claims, wherein said low pressure value is in the order of 1.6 bar and said high pressure value is in the order of 1.8 bar absolute pressure.

**11.** The method according to any of the preceding claims, said method further including the step of presenting a visual indication being visible from the outside of said beverage dispensing system of the measure of said volume of beverage included in said collapsible beverage container, said visual indication indicating whether the measure of said volume of beverage included in said collapsible beverage container is above or below a predetermined volume value, preferably at least two predetermined volume values, such as the volume of beverage being above ¾ of said inner volume, above 1/2 of said inner volume and above ¼ of said inner volume, most preferably said visual indication being a continuous indication of the measure of said volume of beverage included in said collapsible beverage container, such as a gauge.

**12.** The method according to any of the preceding claims, said method further including a linear compensation for wear and tear of said pressure device by monitoring the total time of operation of said pressurization system.

**13.** A beverage dispensing system comprising:

a pressure chamber for accommodating a collapsible container (16) containing a volume of beverage, preferably being a carbonated beverage such as beer, soda, cola, tonic and the like, said pressure chamber defining an inner volume being equal to the sum of said volume of beverage and a residual gas volume, a pressure sensor (46) for detecting a low pressure value $p_{low}$ and a high pressure value $p_{high}$, respectively, in said inner volume, said high pressure value being greater than said low pressure value, and a pressurization system (42) for supplying gas to a residual gas volume in response to detecting the low pressure value of said inner volume and raising the pressure in said inner volume from said low pressure value to said high pressure value, said beverage dispensing system configured to determine a specific volume of gas which has been received by said pressurization system from the outside of said pressure chamber, to compress the specific volume of gas and to introduce the specific volume of gas into said residual gas volume in between detecting the low pressure value in said inner volume and detecting the high pressure value in said inner volume and to establish a measure of said volume of beverage included in said collapsible beverage container, said measure being based on said specific gas volume, said inner volume, said low pressure value and said high pressure value, and

**characterised in that**
said pressurization system (42) includes a housing, a reciprocating piston (52) operating within said housing and a one-way valve, each operating cycle including a forward and a subsequent backward stroke of said piston, said specific volume being equal to said volume covered by each stroke of said piston, or alternatively, wherein said pressurization system includes a housing and a rotating member operating within said housing, each operating cycle including a 360 degree rotation of said rotating member, said specific volume being equal to said volume covered by said rotating member during the 360 degree rotation, said low pressure value being greater than atmospheric pressure, and that the beverage dispensing system comprises a control unit (48) for calculating the volume of beverage $V_{bev}$ remaining in the beverage container according to

$$V_{bev} = V_{in} - \frac{n_{op} \cdot V_{spec}}{p_{high} - p_{low}}$$

wherein $V_{in}$ is the volume of the inner volume, $V_{spec}$ of atmospheric pressure introduced by each operating cycle, $n_{op}$ is the number of operation cycles performed between reaching $p_{low}$ and $p_{high}$ in the pressure chamber.

**14.** The system according to claim 13, wherein said inner volume is in the range of 5 litres to 50 litres, such as between 5-10 litres, 10-20 litres, 20-30 litres, 30-40 litres or 40-50 litres.

**Patentansprüche**

**1.** Verfahren zum Bestimmen eines Getränkevolumens, bei dem es sich bevorzugt um ein kohlensäurehaltiges Getränk wie zum Beispiel Bier oder einen Softdrink handelt, das in einem zusammenfaltbaren Getränkebehälter (16) enthalten ist, wobei das Verfahren das Bereitstellen eines Getränkeausgabesystems umfasst, wobei das Getränkeausgabesystem Folgendes beinhaltet:

eine Druckkammer, in der der zusammenfaltbare Behälter (16) enthalten ist, wobei die Druckkammer ein Innenvolumen definiert, das gleich der Summe des Getränkevolumens und einem Restgasvolumen ist, ein Druckbeaufschlagungssystem (42), um dem Restgasvolumen ein Gasvolumen an atmosphärischem Druck von außerhalb der Druckkammer zuzuführen, und

einen Drucksensor (46), um jeweils einen Niederdruckwert $P_{low}$ und

einen Hochdruckwert $P_{high}$ in dem Innenvolumen zu erfassen, wobei der Hochdruckwert höher als der Niederdruckwert ist,

wobei das Verfahren ferner die folgenden Schritte umfasst:

Zuführen des Gasvolumens zu einem Restgasvolumen, indem das Druckbeaufschlagungssystem verwendet wird, als Reaktion darauf,

dass der Niederdruckwert des Innenvolumens erfasst wird, und der Druck in dem Innenvolumen von dem Niederdruckwert auf den Hochdruckwert erhöht wird,

Bestimmen des Gasvolumens, das dem Restgasvolumen durch das Druckbeaufschlagungssystem von außerhalb der Druckkammer zugeführt wird, zwischen dem Erfassen des Niederdruckwertes in dem Innenvolumen und dem Erfassen des Hochdruckwertes in dem Innenvolumen, und

Festlegen eines Maßes des Getränkevolumens, das in dem zusammenfaltbaren Getränkebehälter enthalten ist, wobei das Maß auf dem Gasvolumen, dem Innenvolumen, dem Niederdruckwert und dem Hochdruckwert basiert,

**dadurch gekennzeichnet, dass** der Niederdruckwert höher als atmosphärischer Druck ist, und dass das Getränkevolumen $V_{bev}$, das in dem Getränkebehälter bleibt, gemäß

$$V_{bev} = V_{in} - \frac{n_{op} \cdot V_{spec}}{p_{high} - p_{low}}$$

berechnet wird,

wobei $V_{in}$ das Volumen des Innenvolumens ist, $V_{spec}$ von atmosphärischem Druck, der durch jeden Betriebszyklus eingeführt wird, und $n_{op}$ die Anzahl an Betriebszyklen ist, die zwischen dem Erreichen von $p_{low}$ und $p_{high}$ in der Druckkammer durchgeführt wird.

2. Verfahren nach Anspruch 1, wobei das Verfahren ferner die folgenden Schritte beinhaltet:

Ausgeben von Getränk aus dem zusammenfaltbaren Getränkebehälter nach außerhalb, während zugelassen wird, dass der Druck in dem Innenvolumen von einem hohen Zwischendruckwert auf einen niedrigen Zwischendruckwert abnimmt, und

Festlegen eines Maßes des Getränkevolumens, das aus dem zusammenfaltbaren Getränkebehälter ausgegeben wird, wobei das Maß auf einem vorherigen Maß des Getränkevolumens, das in dem zusammenfaltbaren Getränkebehälter enthalten ist, dem Innenvolumen, dem niedrigen Zwischendruckwert und dem hohen Zwischendruckwert basiert.

3. Verfahren nach Anspruch 1, wobei das Verfahren ferner die folgenden Schritte beinhaltet:

Festlegen eines Druckwertes des Innenvolumens nach der Ausgabe,

wobei der Druckwert nach der Ausgabe auf einem vorherigen Maß des Getränkevolumens, das in dem zusammenfaltbaren Getränkebehälter enthalten ist, dem Innenvolumen, einem vorbestimmten Getränkevolumen, das auszugeben ist, und einem Druckwert des Innenvolumens vor der Ausgabe basiert, und

Ausgeben von Getränk aus dem zusammenfaltbaren Getränkebehälter nach außerhalb, während zugelassen wird, dass der Druck in dem Innenvolumen von dem Druckwert vor der Ausgabe auf den Druckwert nach der Ausgabe abnimmt.

4. Verfahren nach Anspruch 1, wobei das Verfahren ferner die folgenden Schritte beinhaltet:

Ausgeben von Getränk aus dem zusammenfaltbaren Getränkebehälter nach außerhalb, während dem Restgasvolumen ein weiteres Gasvolumen zugeführt wird, indem das Druckbeaufschlagungssystem verwendet wird und während zugelassen wird, dass sich der Druck in dem Innenvolumen von einem ersten Druckwert zu einem zweiten Druckwert ändert,

Bestimmen des weiteren Gasvolumens, das dem Restgasvolumen durch das Druckbeaufschlagungssystem von außerhalb der Druckkammer zugeführt wird, zwischen dem Erfassen des ersten Druckwertes in dem Innenvolumen und dem Erfassen des zweiten Druckwertes in dem Innenvolumen, und

Festlegen eines Maßes des Getränkevolumens, das aus dem zusammenfaltbaren Getränkebehälter ausgegeben wird, wobei das Maß auf einem vorherigen Maß des Getränkevolumens, das in dem zusammenfaltbaren Getränkebehälter enthalten ist, dem Innenvolumen, dem weiteren Gasvolumen, dem ersten Druckwert und dem zweiten Druckwert basiert.

5. Verfahren nach Anspruch 1, wobei das Verfahren ferner die folgenden Schritte beinhaltet:

Festlegen eines Druckwertes des Innenvolumens nach der Ausgabe, wobei der Druckwert nach der Ausgabe auf einem vorherigen Maß des Getränkevolumens, das in dem zusammenfaltbaren Getränkebehälter enthalten ist, dem Innenvolumen, einem vorbestimmten Getränkevolumen, das auszugeben ist, einem Druckwert des Innenvolumens vor der Ausgabe und einem weiteren Gasvolumen basiert, das dem Restgasvolumen durch das Druckbeaufschlagungssystem von außerhalb der Druckkammer zugeführt wird, zwischen dem Erfassen des Druckwertes in dem Innenvolumen vor der Ausgabe und dem Erfassen des Druckwertes in dem Innenvolumen nach der Ausgabe, und

Ausgeben von Getränk aus dem zusammenfaltbaren Getränkebehälter nach außerhalb, während dem Restgasvolumen das weitere Gasvolumen zugeführt wird, indem das Druckbeaufschlagungssystem verwendet wird und während zugelassen wird, dass sich der Druck in dem Innenvolumen von dem Druckwert vor der Ausgabe zu dem Druckwert nach der Ausgabe ändert.

6. Verfahren nach einem der vorhergehenden Ansprüche, wobei das Druckbeaufschlagungssystem eine Anzahl an Betriebszyklen durchführt, wobei jeder Betriebszyklus die folgenden Schritte umfasst:

Einschließen eines vorbestimmten Gasvolumens von außerhalb der Druckkammer, und Einführen des vorbestimmten Gasvolumens in das Restgasvolumen, wobei ein spezifisches Volumen gleich dem vorbestimmten Volumen mal der Anzahl an Betriebszyklen ist.

7. Verfahren nach Anspruch 6, wobei die Anzahl an Betriebszyklen bestimmt wird, indem die Zeit gemessen wird, in der die Betriebszyklen durchgeführt werden, oder wobei alternativ das Druckbeaufschlagungssystem durch einen Elektromotor angetrieben wird und die Anzahl an Betriebszyklen bestimmt wird, indem die Anzahl an Umdrehungen des Elektromotors gemessen wird, während derer die Betriebszyklen durchgeführt werden, oder wobei noch alternativ die Anzahl an Betriebszyklen bestimmt wird, indem die Anzahl an Druckschwankungen gemessen wird, die innerhalb des Innenvolumens auftreten, wenn das Druckbeaufschlagungssystem aktiviert ist.

8. Verfahren nach einem der vorhergehenden Ansprüche, wobei bestimmt wird, dass das Maß des Getränkevolumens gleich dem Innenvolumen minus dem spezifischen Volumen geteilt durch den Unterschied zwischen dem Hochdruckwert und dem Niederdruckwert ist.

9. Verfahren nach einem der vorhergehenden Ansprüche, wobei das Getränkeausgabesystem ferner einen Drucksensor, um einen Außendruckwert außerhalb der Druckkammer zu bestimmen, und/oder einen Temperatursensor beinhaltet, um einen Außentemperaturwert außerhalb der Druckkammer zu bestimmen, wobei der Außendruckwert und/oder der Außentemperaturwert verwendet werden, um das Maß des Getränkevolumens festzulegen.

10. Verfahren nach einem der vorhergehenden Ansprüche, wobei der Niederdruckwert in der Größenordnung von 1,6 bar ist und der Hochdruckwert in der Größenordnung von 1,8 bar Absolutdruck ist.

11. Verfahren nach einem der vorhergehenden Ansprüche, wobei das Verfahren ferner den Schritt des Präsentierens einer visuellen Angabe, die von außerhalb des Getränkeausgabesystems sichtbar ist, des Maßes des Getränkevolumens, das in dem zusammenfaltbaren Getränkebehälter enthalten ist, beinhaltet, wobei die visuelle Angabe angibt, ob das Maß des Getränkevolumens, das in dem zusammenfaltbaren Getränkebehälter enthalten ist, über oder unter einem vorbestimmten Volumenwert liegt, bevorzugt zumindest zwei vorbestimmten Volumenwerten, wie zum Beispiel, dass das Getränkevolumen über ¾ des Innenvolumens, über ½ des Innenvolumens und über ¼ des Innenvolumens liegt, wobei die visuelle Angabe am meisten bevorzugt eine durchgehende Angabe des Maßes des Getränkevolumens ist, das in dem zusammenfaltbaren Getränkebehälter enthalten ist, wie zum Beispiel eine Pegelanzeige.

12. Verfahren nach einem der vorhergehenden Ansprüche, wobei das Verfahren ferner eine lineare Kompensation für Abnutzung der Druckvorrichtung beinhaltet, indem die Gesamtbetriebszeit des Druckbeaufschlagungssystems überwacht wird.

13. Getränkeausgabesystem, umfassend:

eine Druckkammer zum Unterbringen eines zusammenfaltbaren Behälters (16), der ein Getränkevolumen enthält, bei dem es sich bevorzugt um ein kohlensäurehaltiges Getränk wie zum Beispiel Bier, Soda, Cola, Tonic und dergleichen handelt, wobei die Druckkammer ein Innenvolumen definiert, das gleich der Summe des Getränkevolumens und einem Restgasvolumen ist,
einen Drucksensor (46), um jeweils einen Niederdruckwert $P_{low}$ und
einen Hochdruckwert $P_{high}$ in dem Innenvolumen zu erfassen, wobei der Hochdruckwert größer als der Niederdruckwert ist, und
ein Druckbeaufschlagungssystem (42), um einem Restgasvolumen als Reaktion auf das Erfassen des Niederdruckwertes des Innenvolumens Gas zuzuführen und den Druck in dem Innenvolumen von dem Niederdruckwert auf den Hochdruckwert zu erhöhen, wobei das Getränkeausgabesystem konfiguriert ist, um ein spezifisches Gasvolumen zu bestimmen, das durch das Druckbeaufschlagungssystem von außerhalb der Druckkammer empfangen worden ist, um das spezifische Gasvolumen zu verdichten und um das spezifische Gasvolumen in das Restgasvolumen einzuführen, zwischen dem Erfassen des Niederdruckwertes in dem Innenvolumen und dem Erfassen des Hochdruckwertes in dem Innenvolumen und um ein Maß des Getränkevolumens festzulegen, das in dem zusammenfaltbaren Getränkebehälter enthalten ist, wobei das Maß auf dem spezifischen Gasvolumen, dem Innenvolumen, dem Niederdruckwert und dem Hochdruckwert basiert, und **dadurch gekennzeichnet, dass**
das Druckbeaufschlagungssystem (42) ein Gehäuse, einen hin- und hergehenden Kolben (52), der innerhalb des Gehäuses arbeitet, und ein Einwegventil beinhaltet, wobei jeder Betriebszyklus einen Vorwärts- und einen anschließenden Rückwärtshub des Kolbens beinhaltet, wobei das spezifische Volumen gleich dem Volumen ist, das durch jeden Hub des Kolbens abgedeckt wird, oder wobei alternativ das Druckbeaufschlagungssystem ein Gehäuse und ein Drehelement beinhaltet, das innerhalb des Gehäuses arbeitet, wobei jeder Betriebszyklus eine 360-Grad-Drehung des Drehelements beinhaltet, wobei das spezifische Volumen gleich dem Volumen ist, das durch das Drehelement während der 360-Grad-Drehung abgedeckt wird,
wobei der Niederdruckwert größer als atmosphärischer Druck ist, und
dass das Getränkeausgabesystem eine Steuereinheit (48) umfasst, um das Getränkevolumen $V_{bev}$, das in dem Getränkebehälter bleibt, gemäß

$$V_{bev} = V_{in} - \frac{n_{op} \cdot V_{spec}}{p_{high} - p_{low}}$$

zu berechnen,
wobei $V_{in}$ das Volumen des Innenvolumens ist, $V_{spec}$ von atmosphärischem Druck ist, der durch jeden Betriebszyklus eingeführt wird, und $n_{op}$ die Anzahl an Betriebszyklen ist, die zwischen dem Erreichen von $p_{low}$ und $p_{high}$ in der Druckkammer durchgeführt wird.

**14.** System nach Anspruch 13, wobei das Innenvolumen im Bereich von 5 Litern bis 50 Litern, wie zum Beispiel zwischen 5-10 Litern, 10-20 Litern, 20-30 Litern, 30-40 Litern oder 40-50 Litern liegt.

**Revendications**

**1.** Procédé permettant de déterminer le volume d'une boisson, de préférence une boisson gazeuse telle qu'une bière ou un soda, compris dans un contenant de boisson compressible (16), ledit procédé comprenant la fourniture d'un système de distribution de boisson, ledit système de distribution de boisson comprenant :

une chambre sous pression comprenant ledit contenant compressible (16), ladite chambre sous pression définissant un volume intérieur égal à la somme dudit volume de boisson et d'un volume de gaz résiduel,
un système de mise sous pression (42) permettant de fournir un volume de gaz à pression atmosphérique provenant dudit extérieur de ladite chambre sous pression audit volume de gaz résiduel, et
un capteur de pression (46) permettant de détecter une valeur de pression basse $P_{low}$ et une valeur de pression élevée $P_{high}$, respectivement, dans ledit volume intérieur, ladite valeur de pression élevée étant supérieure à ladite valeur de pression basse,
ledit procédé comprenant en outre les étapes consistant à :

fournir ledit volume de gaz à un volume de gaz résiduel en utilisant ledit système de mise sous pression en réponse à la détection de ladite valeur de pression basse dudit volume intérieur et augmenter ladite pression dans ledit volume intérieur de ladite valeur de pression basse à ladite valeur de pression élevée,
déterminer ledit volume de gaz fourni par ledit système de mise sous pression à partir de l'extérieur de ladite chambre sous pression audit volume de gaz résiduel entre la détection de ladite valeur de pression basse dans ledit volume intérieur et la détection de ladite valeur de pression élevée dans ledit volume intérieur, et
établir une mesure dudit volume de boisson compris dans ledit contenant de boisson compressible, ladite mesure étant basée sur ledit volume de gaz, ledit volume intérieur, ladite valeur de pression basse et ladite valeur de pression élevée,
**caractérisé en ce que** ladite valeur de pression basse est supérieure à la pression atmosphérique, et **en ce que** le volume de boisson $V_{bev}$ restant dans le contenant de boisson est calculé conformément à

$$V_{bev} = V_{in} - \frac{n_{op} \cdot V_{spec}}{p_{high} - p_{low}}$$

dans lequel $V_{in}$ est le volume du volume intérieur, $V_{spec}$ le volume à pression atmosphérique introduit par chaque cycle de fonctionnement, $n_{op}$ est le nombre de cycles de fonctionnement effectués entre l'atteinte de $P_{low}$ et $P_{high}$ dans la chambre sous pression.

2. Procédé selon la revendication 1, ledit procédé comprenant en outre les étapes consistant à :

distribuer une boisson à partir dudit contenant de boisson compressible audit extérieur tout en permettant à ladite pression dans ledit volume intérieur de baisser d'une valeur de pression intermédiaire élevée à une valeur de pression intermédiaire basse, et
établir une mesure dudit volume de boisson distribué à partir dudit contenant de boisson compressible, ladite mesure étant basée sur une mesure précédente dudit volume de boisson compris dans ledit contenant de boisson compressible, ledit volume intérieur, ladite valeur de pression intermédiaire basse et ladite valeur de pression intermédiaire élevée.

3. Procédé selon la revendication 1, ledit procédé comprenant en outre les étapes consistant à :

établir une valeur de pression post-distribution dudit volume intérieur, ladite valeur de pression post-distribution étant basée sur une valeur précédente dudit volume de boisson compris dans ledit contenant de boisson compressible, ledit volume intérieur, un volume de boisson prédéterminé à distribuer et une valeur de pression pré-distribution dudit volume intérieur, et
distribuer une boisson à partir dudit contenant de boisson compressible audit extérieur tout en permettant à ladite pression dans ledit volume intérieur de baisser de ladite valeur de pression pré-distribution à ladite valeur de pression post-distribution.

4. Procédé selon la revendication 1, ledit procédé comprenant en outre les étapes consistant à :

distribuer une boisson à partir dudit contenant de boisson compressible audit extérieur tout en fournissant un volume de gaz supplémentaire audit volume de gaz résiduel en utilisant ledit système de mise sous pression et tout en permettant à ladite pression dans ledit volume intérieur de changer d'une première valeur de pression à une seconde valeur de pression,
déterminer ledit volume de gaz supplémentaire fourni par ledit système de mise sous pression à partir de l'extérieur de ladite chambre sous pression audit volume de gaz résiduel entre la détection de ladite première valeur de pression dans ledit volume intérieur et la détection de ladite seconde valeur de pression dans ledit volume intérieur, et
établir une mesure dudit volume de boisson distribué à partir dudit contenant de boisson compressible, ladite mesure étant basée sur une mesure précédente dudit volume de boisson compris dans ledit contenant de boisson compressible, ledit volume intérieur, ledit volume de gaz supplémentaire, ladite première valeur de pression et ladite seconde valeur de pression.

5. Procédé selon la revendication 1, ledit procédé comprenant en outre les étapes consistant à :

établir une valeur de pression post-distribution dudit volume intérieur, ladite mesure de pression post-distribution étant basée sur une mesure précédente dudit volume de boisson compris dans ledit contenant de boisson compressible, ledit volume intérieur, un volume de boisson prédéterminé à distribuer, une valeur de pression pré-distribution dudit volume intérieur et
un volume de gaz supplémentaire fourni par ledit système de mise sous pression à partir de l'extérieur de ladite chambre sous pression audit volume de gaz résiduel entre la détection de ladite valeur de pression pré-distribution dans ledit volume intérieur et la détection de ladite valeur de pression post-distribution dans ledit volume intérieur, et
distribuer une boisson à partir dudit contenant de boisson compressible à l'extérieur tout en fournissant ledit volume de gaz supplémentaire audit volume de gaz résiduel en utilisant ledit système de mise sous pression et tout en permettant à ladite pression dans ledit volume intérieur de changer de ladite valeur de pression pré-distribution à ladite valeur de pression post-distribution.

6. Procédé selon l'une quelconque des revendications précédentes, dans lequel ledit système de mise sous pression effectue un nombre de cycles de fonctionnement, chaque cycle de fonctionnement comprenant les étapes consistant à :

enfermer un volume de gaz prédéterminé provenant de l'extérieur de ladite chambre sous pression, et

introduire ledit volume de gaz prédéterminé dans ledit volume de gaz résiduel, un volume spécifique étant égal audit volume prédéterminé multiplié par le nombre de cycles de fonctionnement.

7. Procédé selon la revendication 6, dans lequel le nombre de cycles de fonctionnement est déterminé en mesurant le temps durant lequel lesdits cycles de fonctionnement sont effectués, ou, en variante, dans lequel ledit système de mise sous pression est entraîné par un moteur électrique et le nombre de cycles de fonctionnement est déterminé en mesurant le nombre de révolutions dudit moteur électrique durant lequel lesdits cycles de fonctionnement sont effectués, ou, encore en variante, dans lequel le nombre de cycles de fonctionnement est déterminé en mesurant le nombre de variations de pression se produisant dans ledit volume intérieur lorsque ledit système de mise sous pression est activé.

8. Procédé selon l'une quelconque des revendications précédentes, dans lequel la mesure dudit volume de boisson est déterminée comme étant égale audit volume intérieur moins ledit volume spécifique divisé par ladite différence entre ladite valeur de pression élevée et ladite valeur de pression basse.

9. Procédé selon l'une quelconque des revendications précédentes, ledit système de distribution de boisson comprenant en outre un capteur de pression permettant de déterminer une valeur de pression extérieure à l'extérieur de ladite chambre sous pression et/ou un capteur de température permettant de déterminer une valeur de température extérieure à l'extérieur de ladite chambre sous pression, ladite valeur de pression extérieure et/ou ladite valeur de température extérieure étant utilisées pour établir la mesure dudit volume de boisson.

10. Procédé selon l'une quelconque des revendications précédentes, dans lequel ladite valeur de pression basse est de l'ordre de 1,6 bar et ladite valeur de pression élevée est de l'ordre de 1,8 bar de pression absolue.

11. Procédé selon l'une quelconque des revendications précédentes, ledit procédé comprenant en outre l'étape consistant à présenter une indication visuelle visible depuis l'extérieur dudit système de distribution de boisson de la mesure dudit volume de boisson compris dans ledit contenant de boisson compressible, ladite indication visuelle indiquant si la mesure dudit volume de boisson compris dans ledit contenant de boisson compressible est supérieure ou inférieure à une valeur de volume prédéterminée, de préférence au moins deux valeurs de volume prédéterminées, comme le volume de boisson étant supérieur à ¾ dudit volume intérieur, supérieur à 1/2 dudit volume intérieur et supérieur à ¼ dudit volume intérieur, de manière préférée entre toutes ladite indication visuelle étant une indication continue de la mesure dudit volume de boisson compris dans ledit contenant de boisson compressible, comme une jauge.

12. Procédé selon l'une quelconque des revendications précédentes, ledit procédé comprenant en outre une compensation linéaire de l'usure dudit dispositif de pression en surveillant le temps total de fonctionnement dudit système de mise sous pression.

13. Système de distribution de boisson comprenant :

une chambre sous pression permettant de recevoir un contenant compressible (16) contenant un volume de boisson, de préférence une boisson gazeuse telle que bière, soda, cola, tonic et autres,

ladite chambre sous pression définissant un volume intérieur égal à la somme dudit volume de boisson et d'un volume de gaz résiduel,

un capteur de pression (46) permettant de détecter une valeur de pression basse $P_{low}$ et une valeur de pression élevée $P_{high}$, respectivement, dans ledit volume intérieur, ladite valeur de pression élevée étant supérieure à ladite valeur de pression basse, et

un système de mise sous pression (42) permettant de fournir du gaz à un volume de gaz résiduel en réponse à la détection de la valeur de pression basse dudit volume intérieur et augmenter la pression dans ledit volume intérieur de ladite valeur de pression basse à ladite valeur de pression élevée, ledit système de distribution de boisson étant configuré pour déterminer un volume de gaz spécifique qui a été reçu par ledit système de mise sous pression à partir de l'extérieur de ladite chambre sous pression, pour comprimer le volume de gaz spécifique et pour introduire le volume de gaz spécifique dans ledit volume de gaz résiduel entre la détection de la valeur de pression basse dans ledit volume intérieur et la détection de la valeur de pression élevée dans ledit volume intérieur et pour établir une mesure dudit volume de boisson compris dans ledit contenant de boisson compressible, ladite mesure étant basée sur ledit volume de gaz spécifique, ledit volume intérieur, ladite valeur de pression basse et ladite valeur de pression élevée, et

**caractérisé en ce que** ledit système de mise sous pression (42) comprend un boîtier, un piston alternatif (52) fonctionnant dans ledit boîtier et une soupape unidirectionnelle, chaque cycle de fonctionnement comprenant une course avant et une course arrière suivante dudit piston, ledit volume spécifique étant égal audit volume couvert par chaque course dudit piston, ou en variante,

dans lequel ledit système de mise sous pression comprend un boîtier et un élément rotatif fonctionnant dans ledit boîtier, chaque cycle de fonctionnement comprenant une rotation à 360 degrés dudit élément rotatif, ledit volume spécifique étant égal audit volume couvert par ledit élément rotatif durant la rotation à 360 degrés,

ladite valeur de pression basse étant supérieure à la pression atmosphérique, et

**en ce que** le système de distribution de boisson comprend une unité de commande (48) permettant de calculer le volume de boisson $V_{bev}$ restant dans le contenant de boisson conformément à

$$V_{bev} = V_{in} - \frac{n_{op} \cdot V_{spec}}{p_{high} - p_{low}}$$

dans lequel $V_{in}$ est le volume du volume intérieur, $V_{spec}$ le volume à pression atmosphérique introduit par chaque cycle de fonctionnement, $n_{op}$ est le nombre de cycles de fonctionnement effectués entre l'atteinte de $P_{low}$ et $P_{high}$ dans la chambre sous pression.

14. Système selon la revendication 13, dans lequel ledit volume intérieur se trouve dans la plage de 5 litres à 50 litres, par exemple entre 5 et 10 litres, 10 et 20 litres, 20 et 30 litres, 30 et 40 litres ou 40 et 50 litres.

EP 2 595 914 B1

FIG.1B

FIG.1A

22

FIG.1D

FIG.1C

EP 2 595 914 B1

FIG. 1E

FIG. 3

FIG. 2

10''''

70    40    68    64'    30'

42'    44'    12'

FIG. 4

FIG. 5

EP 2 595 914 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007019848 A
- WO 2007019849 A
- WO 2007019850 A
- WO 2007019851 A
- WO 2007019853 A
- US 4225057 A
- US 5511694 A
- US 20080071424 A
- US 7096617 B2
- US 7337920 B2
- EP 1218286 B1
- US 3311267 A
- GB 1223848 A
- US 3956934 A
- GB 1577499 A
- GB 2077432 A
- GB 2099584 A
- EP 2065685 A2
- US 20090165477 A1
- EP 0791810 A2
- EP 2041525 A1
- GB 2192989 A
- GB 2094474 A
- EP 0414156 A2
- WO 2004050537 A2
- EP 2053014 A1

- EP 2091858 A1
- DE 3511224
- US 5837944 A
- GB 2354080 A
- US 7255003 B2
- US 5007560 A
- US 5894089 A
- US 6260414 B1
- US 6925872 B2
- US 7302846 B2
- EP 1009978 A1
- GB 2170602 A
- US 4732297 A
- GB 2273560 A
- US 6819250 B2
- EP 0613854 B1
- JP 2007278778 A
- EP 1506523 A
- JP 2005274204 A
- US 5909825 A
- GB 2263687 A
- US 20050194399 A1
- WO 2004050537 A
- WO 2008005564 A
- WO 2009024147 A

28